# EUROPEAN PATENT APPLICATION

(11) **EP 2 238 832 A1**
(43) Date of publication of application: **13.10.2010**
(21) Application number: 10159420.8
(22) Date of filing: 08.04.2010
(51) Int. Cl.: A01K 97/02, F41B 3/02, A01K 97/04

(54) **Catapult**

(30) Priority: 09.04.2009 GB 0906276
(71) Applicant: Paioli Sport S.P.A., 40138 Bologna (IT)
(72) Inventor: Briscoe, P J, Redditch, B97 5PJ (GB)
(74) Representative: Brogi, Graziano

(57) **Abstract**

A catapult (10) for projecting measured plugs of ground bait, has a catapult frame (12) having a tubular handle portion (10) and a forked pair of limbs (16) extending from one end of the handle portion (10), a pair of lengths of elastic, one length of elastic being attached at one end to the free end of one of the limbs and at the other end to one side of a pouch or cup, the other length of elastic being attached at one end to the free end of the other of the limbs (16) and at the other end to an opposite side of the pouch or cup, a cylindrical cup (20) being detachably secured to the end (24) of the handle portion (10) remote from the forked limbs, coaxially of the handle portion (10), a plunger (30) extending through the handle portion (10), said plunger having a stem portion (32) with an enlarged diameter head formation (34) at one end, the head formation (34) being in sliding engagement with an interior cylindrical wall (26) of the cylindrical cup (20), the enlarged diameter formation (34) being provided at the opposite end of the stem portion (32) to abut the end of the handle portion (10), when the head formation (34) is adjacent the free end of the cylindrical cup (20).

## Description

The present invention relates to catapults and in particular catapults used in angling for projecting ground bait accurately to the area being fished.

It is common practice for anglers to use a catapult to project ground bait, often over some distance, in order to attract fish to the area of water they are fishing. The catapults used comprise a rigid frame having a handle portion with a forked pair of limbs extending symmetrically from one end of the handle portion. Lengths of elastic extend from the free ends of the forked limbs, the free ends of the lengths of elastic being connected to opposite sides of a pouch or cup. The ground bait is placed in the pouch or cup which is pulled back to tension the lengths of elastic. The pouch or cup is then released to project the contents of the pouch or cup to the desired area that is being fished.

The ground bait is typically a particulate material which is moistened and moulded into a ball. This is typically done manually, the angler taking a hand full of bait and shaping it into a ball with his hands. This procedure is relatively time consuming and messy. Moreover there is little control over the consistency of the size or density of the ball of ground bait which may result in the ball of ground bait breaking up as it is projected by the catapult, so that accuracy is lost.

The present invention provides a catapult device with means for compacting a measured amount of ground bait to form a plug of ground bait of uniform size and density, which may be accurately projected by the catapult.

According to one aspect of the present invention a catapult for projecting measured plugs of ground bait, comprises a catapult frame having a tubular handle portion and a forked pair of limbs extending from one end of the handle portion, a pair of lengths of elastic, one length of elastic being attached at one end to the free end of one of the limbs and at the other end to one side of a pouch or cup, the other length of elastic being attached at one end to the free end of the other of the limbs and at the other end to an opposite side of the pouch or cup, a cylindrical cup being detachably secured to the end of the handle portion remote from the forked limbs, coaxially of the handle portion, a plunger extending through the handle portion, said plunger having a stem portion with an enlarged diameter head formation at one end, the head formation being in sliding engagement with an interior cylindrical wall of the cylindrical cup, an enlarged diameter formation being provided at the opposite end of the stem portion to abut the end of the handle portion, when the head formation is adjacent the free end of the cylindrical cup.

With the catapult device described above, the free end of the cylindrical cup may be pushed down into a mass of moist particulate ground bait, the head of the plunger being depressed towards the adjacent end of the handle portion until the head portion abuts the end of the cylindrical cup and the ground bait is compressed to the required degree. A plug of ground bait of uniform size and density, may then be ejected from the cylindrical cup into the pouch or cup of the catapult, by depression of the plunger. In this manner the catapult may be quickly loaded with a consistently uniform plug of ground bait, without mess.

The releasable attachment of the cylindrical cup to the handle portion, allows the cylindrical cup and plunger assembly to be interchanged with cylindrical cups/plungers of different size, for example different diameter and/or length to give different sized plugs, as required.

The invention is now described, by way of example only, with reference to the accompanying drawings, in which:-
Figure 1 shows a front elevation of a catapult in accordance with the present invention; and
Figure 2 is an exploded part sectional view of the catapult illustrated in figure 1.

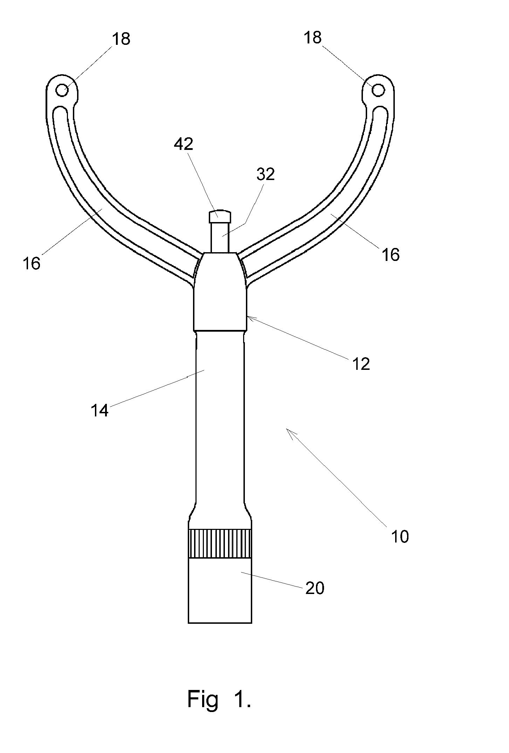

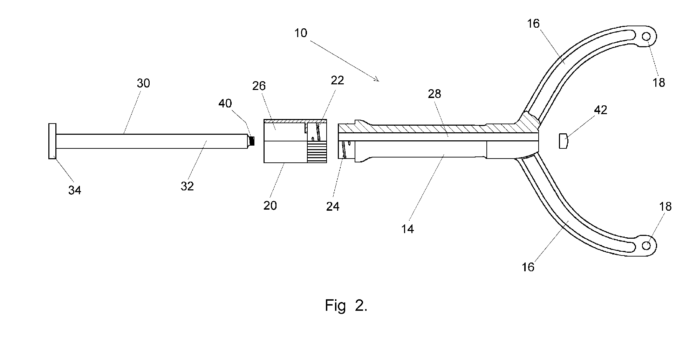

As illustrated in figures 1 and 2, a catapult 10 comprises a frame 12 having a tubular handle portion 14 and a pair of arcuate limbs 16 extending to opposite sides and axially away from the handle portion 10, from one end of the handle portion 10. Formations 18 are provided at the free ends of limbs 16 by which lengths of elastic (not shown) may be secured at one end to the limbs 16, in known manner. The other ends of the lengths of elastic are secured to a pouch or cup (not shown).

A cup formation 20 is secured coaxially to the end of handle portion 14 remote from the end from which the limbs 16 extend, by means of a female screw thread formation 22, which engages a corresponding male thread formation 24 on the end of the handle portion 14. The cup formation 20 has a cylindrical bore 26 of greater diameter than the bore 28 of the tubular handle portion 14, the cylindrical bore 26 opening to the end of the cup formation 20 remote from the handle portion 14. The bore 26 of the cup formation steps down to the diameter of the bore 28 of the tubular handle portion 14, at its connection to the handle portion 14.

A plunger 30 is slidably located in the bore 28 of the handle portion. The plunger 30 has a stem 32 of diameter slightly less than the diameter of the bore 28 and a head portion 34 of enlarged diameter, which is slightly less than the diameter of the cylindrical bore 26. The plunger 30 is consequently slidable in the bore 28 of handle portion 14 with the head portion 34 slidably engaging the cylindrical bore 26.

A male screw thread formation 40 is provided at the end of the stem 32, for engagement of a corresponding female screw thread on a stop formation 42 of greater diameter than the bore 28, so that the stop formation 42 will abut the end of the tubular handle portion 14 adjacent the limbs 16, when the head portion 34 of the plunger 30 is adjacent the open end of cylindrical bore 26.

With the catapult 10 described above, the free end of the cup formation 20 may be pushed axially into a mass of moist particulate ground bait, so that a plug of ground bait is formed in the cylindrical bore 26, the pressure of ground bait entering the cylindrical bore 26 forcing the head formation 34 of the plunger 30 towards the handle portion 14. Once the head portion 34 of plunger 30 abuts the end of the cylindrical bore 26, pressure on the cup formation 20 will consolidate to plug of ground bait until it is of the required density. The cup formation may then be withdrawn from the mass of ground bait, the pouch or cup of the catapult may then be positioned beneath the cup formation 20 and the plug of ground bait ejected into the pouch or cup, by depressing the end of the stem 32 towards the end of handle portion14. The catapult may then be fired to project the plug of ground bait to the area being fished.

The cup formation 20 and plunger 30 maybe removed from the handle portion 14, by removing the stop formation 42 to release the plunger 30 and then unscrewing the cup formation 20 from the handle portion 14. In his manner different sized cup formations 20 and plungers 30 may be used to provide different sized plugs of ground bait.

According to and alternative embodiment of the invention, the head portion of the plunger may be releasably secured to the stem, so that when changing the size of the cylindrical cup, the head only of the plunger may be replaced to accommodate the change in size of the cylindrical cup, rather than replacing the complete plunger assembly.

Various modifications may be made without departing from the invention. For example, while in the above embodiments the cylindrical cup is attached to the handle portion of the catapult frame by interengaging screw threads any other suitable means, for example a bayonet connection may be used.

While the cup formation 20 and plunger 30 assembly of the present invention is particularly suitable for use with moist particulate ground bait, it may alternatively be used to punch plugs from solid bait materials, for example bread.

## Claims

1. A catapult (10) for projecting measured plugs of ground bait, comprising a catapult frame (12) having a tubular handle portion (14) and a forked pair of limbs (16) extending from one end of the handle portion (14), a pair of lengths of elastic, one length of elastic being attached at one end to the free end of one of the limbs (16) and at the other end to one side of a pouch or cup, the other length of elastic being attached at one end to the free end of the other of the limbs (16) and at the other end to an opposite side of the pouch or cup, a cylindrical cup (20) being detachably secured to the end (24) of the handle portion (14) remote from the forked limbs, coaxially of the handle portion (14), a plunger (30) extending through the handle portion (14), said plunger (30) having a stem portion (32) with an enlarged diameter head formation (34) at one end, the head formation (34) being in sliding engagement with an interior cylindrical wall of the cylindrical cup (20), the enlarged diameter formation (34) being provided at the opposite end of the stem portion to abut the end (24) of the handle portion (14), when the head formation is adjacent the free end of the cylindrical cup (20).

2. A catapult according to claim 1, wherein the cup (20) is attached to the handle portion (14) by means of a screw thread (22) or bayonet connection.

3. A catapult according to claim 1 or 2, wherein different sized cups (20) may be attached to the handle portion (14).

4. A catapult according to claim 3, wherein cups (20) of different diameter may be secured to the handle portion (14).

5. A catapult according to claim 4, wherein the head formation (34) of the plunger (30) is detachable to allow heads of different diameter to be secured to the stem (32) of the plunger (30), to slidingly engage different diameter cups.

6. A catapult according to one of the foregoing claims, wherein the handle portion (14) comprises a bore (28).

7. A catapult according to one of the foregoing claims, wherein the cup (20) comprises a cylindrical bore (26).

8. A catapult according to claim 7, wherein a male screw thread formation (40) is provided at the end of the stem (32), for engagement of a corresponding female screw thread on a stop formation (42) of greater diameter than the bore (28), so that the stop formation (42) will abut the end of the tubular handle portion (14) adjacent the limbs (16), when the head portion (34) of the plunger (30) is adjacent the open end of cylindrical bore (26).
